# EUROPÄISCHE PATENTSCHRIFT

(11) **EP 3 161 326 B1**
(45) Veröffentlichungstag und Bekanntmachung des Hinweises auf die Patenterteilung: **03.08.2022**
(21) Anmeldenummer: 15729420.8
(22) Anmeldetag: 10.06.2015
(51) Int. Cl.: F04F 9/00, F04F 9/08, F04F 9/04

(54) **DIFFUSIONSPUMPE**
DIFFUSION PUMP
POMPE À DIFFUSION

(30) Priorität: 30.06.2014 DE 102014212644
(43) Veröffentlichungstag der Anmeldung: 03.05.2017
(60) Teilanmeldung: 22153959.6
(73) Patentinhaber: Leybold GmbH, 50968 Köln (DE)
(72) Erfinder: SCHWEIZER, Hans-Werner, 50321 Brühl (DE)
(74) Vertreter: dompatent von Kreisler Selting Werner - Partnerschaft von Patent- und Rechtsanwälten mbB
(86) Internationale Anmeldenummer: PCT/EP2015/062987
(87) Internationale Veröffentlichungsnummer: WO 2016/000924

(56) Entgegenhaltungen:
- CH-A- 429 008
- US-A- 2 855 140
- US-A- 4 191 512
- US-A- 4 566 861
- US-A- 4 610 603

## Beschreibung

Die Erfindung betrifft eine Diffusionspumpe.

Übliche Diffusionspumpen wie beispielsweise bekannt aus US 2,855,140 weisen einen Siederaum auf, in welchem ein Heizelement angeordnet ist. Durch das Heizelement wird ein Treibmittel verdampft. Unmittelbar an den Siederaum anschließend weist eine übliche Diffusionspumpe ein Gehäuse auf. Im dem Gehäuse ist eine Düse angeordnet. Der Treibmitteldampf steigt vom Siederaum auf zur Düse, wird durch die Düse zu einem schirmförmigen Dampfstrahl umgelenkt und reißt diffundierende Gasmoleküle mit. Anschließend wird der Treibmitteldampf durch einen Kondensator wieder kondensiert. Das kondensierte Treibmittel gelangt wieder zurück zum Siederaum. Das mitgeführte Gas wird durch eine, an einem Vorvakuumstutzen angeschlossene Vakuumpumpe abgepumpt. Durch diesen Prozess wird Gas aus einer Vakuumkammer heraus gefördert, sodass in der Vakuumkammer ein Vakuum entsteht.

Der in einer Diffusionspumpe verwendete Diffusionsprozess weist einen hohen Energieverbrauch auf. Zunächst muss das Treibmittel bei einer hohen Temperatur zum Sieden bzw. Verdampfen gebracht werden. Dies erfolgt üblicherweise durch elektrische Heizenergie. Jedoch muss der Treibmitteldampf wieder zum Kondensieren gebracht werden. Hierzu muss die eingebrachte Wärme wieder abgeführt werden. Abgeführte Wärme ist Verlustenergie, die dem Gesamtprozess entzogen wird.

Darüber hinaus wird der Diffusionsprozess bei bekannten Diffusionspumpen unreguliert betrieben, d.h. das Heizelement heizt das Treibmittel auf eine voreingestellte (Temperatur-) Wert auf. Diese voreingestellte Temperatur wird nachfolgend konstant gehalten. Auch wird an die voreingestellte Temperatur keine höhere Anforderung gestellt außer, dass ein Verdampfen des Treibmittels erfolgt und das Treibmittel nicht thermisch zersetzt wird. Auch die Kühlung der bekannten Diffusionspumpen ist unreguliert, sodass eine maximale Kühlung gewählt wird. Bei einem unregulierten Heizelement kommt hinzu, dass nicht benötigte Heizwärme durch eine verstärkte Kühlung abgeführt werden muss.

US 4,566,861 offenbart eine Diffusionspumpe, bei der die Leistung des Heizelements angepasst wird an eine Temperatur des Kühlmittels sowie gleichzeitig an eine Temperatur des Siederaums. Hierdurch wird eine Pumpleistung auch bei geringer Kühlleistung der Kondensatorkühlung erreicht sowie eine schnelle Wiederherstellung der Pumpleistung.

US 4,610,603 offenbart eine Diffusionspumpe, wobei die Temperatur der Kondensatorkühlung erfasst wird und das Heizelement abgeschaltet wird bei Überschreiten einer Temperatur des Kondensators.

US 4,191,512 offenbart eine Diffusionspumpe, bei der das Druckverhältnis zwischen Einlass und Auslass ermittelt wird und die Heizleistung des Heizelements gesteuert wird, so dass das Verhältnis zwischen Einlassdruck und Auslassdruck stets konstant ist.

Somit sind bekannte Diffusionspumpen energieineffizient und zeichnen sich durch einen unnötig hohen Energieverbrauch aus.

Aufgabe der vorliegenden Erfindung ist es eine Diffusionspumpe zu schaffen, bei der der Energieverbrauch gesenkt wird.

Die Aufgabe wird gelöst durch eine Diffusionspumpe gemäß Anspruch 1.

Die erfindungsgemäße Diffusionspumpe, insbesondere eine energieeffiziente Diffusionspumpe, weist ein Gehäuse auf. Mit dem Gehäuse ist ein Siederaum verbunden, wobei im Bereich des Siederaums ein Heizelement angeordnet ist. Durch das Heizelement im Siederaum wird ein Treibmittel verdampft. Im Gehäuse ist eine Düse angeordnet, welche mit dem Siederaum verbunden ist. Der Treibmitteldampf aus dem Siederaum gelangt somit zur Düse und tritt durch die Düse aus. An einer Innenseite des Gehäuses, im Bereich der Düse, ist ein Kondensator angeordnet. Weiter ist im Bereich des Kondensators eine Kühlung angeordnet zur Kühlung des Kondensators. Der aus der Düse austretende Treibmitteldampf gelangt zu dem Kondensator und kondensiert an der Düse. Das kondensierte Treibmittel gelangt wieder in den Siederaum der Diffusionspumpe. Insbesondere ist mit dem Gehäuse eine Vakuumkammer verbunden, welche durch die Diffusionspumpe evakuiert wird.

Insbesondere ist der Siederaum thermisch vom Gehäuse und insbesondere vom Kondensator durch einen Isolator getrennt. Durch den Isolator wird verhindert das Wärme, die durch das Heizelement im Siederaum erzeugt wird, übertragen werden kann auf den Kondensator, da die Temperatur im Siederaum erheblich höher ist als die Temperatur des Kondensators. Wärme, die bei einem fehlenden Isolator vom Siederaum auf den Kondensator übertagen werden würde, müsste durch die Kühlung des Kondensators wieder abgeführt werden, um eine konstante Temperatur des Kondensators zu gewährleisten. Dies erhöht die Anforderung an die Kühlung des Kondensators. Gleichzeitig entsteht durch die abgeleitete Wärme eine Verlustenergie, da die abgeleitete Wärme nicht mehr zur Aufheizung des Treibmittels zur Verfügung steht. Der Isolator zeichnet sich deshalb insbesondere durch eine geringe Wärmeleitfähigkeit aus, sodass Wärme gerade nicht vom Siederaum auf den Kondensator übertragen werden kann. Hierdurch wird sowohl der Energieverbrauch des Heizelements reduziert als auch die Anforderung an die Kühlung des Kondensators.

Insbesondere ist die Kühlung des Kondensators der erfindungsgemäßen Diffusionspumpe zumindest teilweise ausgebildet als Wasserkühlung. Hierbei wird die am Kondensator auftretende Kondensationswärme durch die Wasserkühlung abgeführt.

Erfindungsgemäß ist die Kühlung des Kondensators der erfindungsgemäßen Diffusionspumpe über eine Wärmepumpe mit dem Heizelement verbunden. Hierdurch wird Wärme, die am Kondensator durch das Kondensierten des Treibmitteldampfs entsteht, zum Heizelement befördert, sodass die beförderte Wärme benutzt werden kann, um das Treibmittel zu verdampfen. Durch die Wärmepumpe ist es möglich, Wärmeenergie, die durch den Kondensator dem Prozess entzogen werden muss, dem Pumpprozess durch das Heizelement wieder zugeführt werden kann. Dies reduziert die Verlustleistung des Prozess erheblich, sodass sowohl die erforderliche Energie für das Heizelement reduziert werden kann, als auch die Anforderung an die Kühlung des Kondensators. Insbesondere, falls es sich bei der Kühlung des Kondensators um eine Wasserkühlung handelt, kann durch das Vorsehen einer Wärmepumpe die erforderliche Wassermenge zur Kühlung des Kondensators reduziert werden.

Insbesondere weist die erfindungsgemäße Diffusionspumpe eine Temperaturerfassung auf, die die Kondensatortemperatur erfasst, wobei die Temperaturerfassung mit einer Kondensatorkühlungsregelung verbunden ist zur Regelung der Kühlung des Kondensators. Hierdurch kann die Kühlung des Kondensators individuell angepasst werden an die vorliegenden Erfordernisse. Hierbei ist eine Reduzierung der Temperatur des Kondensators auf die niedrigste mögliche Temperatur nicht mehr erforderlich. Durch die Regelung der Kühlung des Kondensators und der damit verbundenen Anpassung an die erforderliche Kondensatortemperatur kann weitere Energie, insbesondere Energie zur Kühlung des Kondensators, verringert werden. Handelt es sich bei der Kühlung des Kondensators um eine Wasserkühlung, kann durch das Vorsehen einer Temperaturerfassung und einer mit der Temperaturerfassung verbundenen Kondensatorkühlungsregelung die erforderliche Kühlwassermenge reduziert werden.

Insbesondere weist die erfindungsgemäße Diffusionspumpe eine Heizelementregelung auf, die mit dem Heizelement verbunden ist. Durch die Heizelementregelung ist die Leistung des Heizelements anpassbar an die vorliegende Pumpsituation. Dabei sind drei Pumpsituationen denkbar. Bei einer ersten Pumpsituation ist kein oder nur ein geringes Pumpen der Diffusionspumpe erforderlich. Diese Pumpsituation liegt insbesondere vor zwischen zwei Pumpvorgängen. Eine zweite Pumpsituation ist das Abpumpen, bei dem ausgehend von einem Vorvakuum, insbesondere erzeugt durch eine Vorvakuumpumpe der Arbeitsdruck in der Vakuumkammer erreicht werden soll. Dabei ist als Arbeitsdruck der Druck zu verstehen, welcher durch die Diffusionspumpe in der Vakuumkammer erzeugt werden soll. Die zweite Pumpsituation zeichnet sich insbesondere durch einen großen Massefluss aus. In der dritten Pumpsituation wird durch die Diffusionspumpe der Arbeitsdruck in der Vakuumkammer gehalten. Weiterhin ist ein Pumpen der Diffusionspumpe erforderlich, jedoch ist der Massestrom deutlich geringer als beim Abpumpen. Je nach vorliegender Pumpsituation wird die Heizleistung des Heizelements angepasst durch die Heizelementregelung, sodass eine optimale Ausnutzung der Heizleistung vorliegt und keine überflüssige Wärme in die Diffusionspumpe eingebracht wird, welche aufwendig durch die Kühlung des Kondensators wiederum abgeführt werden müsste.

Durch einzelne der vorstehend genannten unabhängigen Maßnahmen oder durch eine Kombination erhält man eine energieeffiziente Diffusionspumpe, durch die der Energieverbrauch erheblich gesenkt werden kann.

Insbesondere ist die Diffusionspumpe ausgebildet um einen Vakuumdruck von 10⁻³ mbar, bevorzugt 10⁻⁶ mbar und besonders bevorzugt 10⁻⁹ mbar zu erzeugen.

Insbesondere weist der Isolator zur thermischen Trennung des Siederaums von dem Kondensator PEEK, PTFE, einen anderen Kunststoff oder eine Keramik auf. Diese Materialien zeichnen sich insbesondere durch eine geringe Wärmeleitfähigkeit aus, wobei gleichzeitig eine hohe thermische Stabilität dieser Materialien gewährleistet ist.

Vorzugsweise ist der Siederaum im Bereich des Heizelements insbesondere vollständig thermisch gegen die Umgebung isoliert. Hierdurch wird der Wärmeverlust durch die Abgabe der Wärme von der Außenseite des Siederaums an die Umgebung reduziert. Insbesondere wird die durch das Heizelement erzeugte Wärme im Siederaum gehalten, sodass die Heizleistung und die damit zur Aufheizung des Fördermittels erforderliche Energie weiter reduziert werden.

Insbesondere weist die Diffusionspumpe eine von der Düse axial beabstandete Dampfsperre auf, wobei die Dampfsperre eine von der Kühlung des Kondensators unabhängigen Dampfsperrkühlung aufweist. Durch die Dampfsperre soll verhindert werden, dass Treibmitteldampf in die Vakuumkammer gelangt, da der Treibmitteldampf vorher an der Dampfsperre kondensiert wird. Insbesondere ist der Temperaturunterschied zwischen der Dampfsperre und dem Kondensator groß und besonders bevorzugt größer als 20 °C. Hierdurch wird sichergestellt, dass Treibmitteldampf, welcher nicht am Kondensator kondensiert, an der Dampfsperre kondensiert wird. Insbesondere falls die Kondensatorkühlung durch das Vorsehen einer Kondensatorkühlungsregelung variabel ausgestaltet ist, ist es bevorzugt die Dampfsperrenkühlung derart auszubilden, dass eine konstante Kühlung der Dampfsperre erreicht wird. Da es sich bei der Dampfsperre um ein System handelt, welches Gerätschaften in der Vakuumkammer vor einer Beschädigung durch Treibmitteldampf schützen soll, muss sichergestellt werden, dass die Dampfsperre in jedem Fall ordnungsgemäß funktioniert. Dies wird erreicht durch die konstante Kühlung.

Insbesondere weist die Dampfsperre und der vakuumseitige Bereich des Kondensators eine Temperatur von 20°C - 30°C auf. Bei dem hochvakuumseitigen Bereich handelt es sich dabei um einen Bereich des Kondensators, welcher in Richtung der Vakuumkammer weist. Durch die geringe Temperatur der Dampfsperre und dem Kondensator ist sichergestellt, dass das Treibmittel zuverlässig kondensiert. Insbesondere kann jedoch die Temperatur des Kondensators geändert werden in Abhängigkeit des erforderlichen Arbeitsdrucks oder der erforderlichen Pumpleistung.

Insbesondere ist zwischen der Düse und dem Siederaum ein Vorvakuumstutzen angeordnet, welcher mit einer Vorvakuumpumpe verbindbar ist. Der Vorvakuumstutzen weist dabei eine Kühlung auf. Bevorzugt ist die Kühlung als Vorvakuumstützen unabhängig von der Kühlung des Kondensators. Durch die Kühlung des Vorvakuumstützens wird verhindert, dass Treibmitteldampf in die Vorvakuumpumpe gelangt.

Vorzugsweise handelt es sich bei der Kühlung des Vorvakuumstutzens und/ oder der Kühlung der Dampfsperre zumindest teilweise um eine Wasserkühlung.

Insbesondere, falls es ich bei der Kühlung des Kondensators zumindest teilweise um eine Wasserkühlung handelt, weist die Kondensatorkühlungsregelung ein Thermostatventil auf, durch das die Menge an Kühlwasser in Abhängigkeit der erfassten Kondensatortemperatur kontrolliert werden kann.

Insbesondere weist die Kondensatorkühlungsregelung eine Notfalleinrichtung auf, wobei durch die Notfalleinrichtung eine Mindestkühlung des Kondensators sichergestellt ist. Da bei Ausfall der Kühlung des Kondensators der Treibmitteldampf nicht mehr kondensiert wird, würde dieser unkontrolliert in die Vakuumkammer eintreten. Um dies zu verhindern wird durch die Notfalleinrichtung eine Mindestkühlung des Kondensators sichergestellt. Insbesondere, falls die Kondensatorkühlungsregelung ein Thermostatventil aufweist, wird die Mindestkühlung sichergestellt durch einen Bypass am Thermostatventil vorbei. Durch den Bypass fließt gerade so viel Kühlwasser, dass die Mindestkühlung des Kondensators erreicht wird. Fällt die Kondensatorkühlungsregelung aus, strömt weiterhin Kühlwasser durch den Bypass zum Kondensator zur Kühlung des Kondensators.

Insbesondere ist ein Verdampfer der Wärmepumpe mit der Kühlung des Kondensators verbunden und ein Kondensator der Wärmepumpe mit dem Heizelement verbunden. Hierdurch wird Wärme, die durch den Kondensator vom Treibmittel abgeführt wird, dem Heizelement wieder zugeführt. Insbesondere ist die Wärmepumpe als Kompressionswärmepumpe oder als Absorptionswärmepumpe ausgebildet.

Insbesondere ist es bevorzugt, die Kühlung des Kondensators sowohl durch eine Wasserkühlung als auch durch eine Wärmepumpe vorzunehmen. Insbesondere weist der hochvakuumseitige Bereich des Kondensators eine Wasserkühlung auf, und der sich in Richtung des Heizelements anschließende Bereich des Kondensators ist mit der Wärmepumpe verbunden.

Vorzugsweise ist die Wärmepumpe mehrstufig ausgebildet, wodurch ein höherer Temperaturunterschied zwischen dem Verdampfer der Wärmepumpe, der mit der Kühlung des Kondensators verbunden ist, und dem Kondensator der Wärmepumpe, der mit dem Heizelement verbunden ist, vorgesehen werden kann.

Insbesondere handelt es sich bei dem Treibmittel um ein Silikonöl, ein Mineralöl oder Fomblin ^{®}. Vorzugsweise handelt es sich bei dem Mineralöl um Diffelen. Bevorzugt ist dabei, dass das verwendete Treibmittel eine kleine Verdampfungsenthalpie aufweist.

In der Wasserkühlung wird bevorzugt Wasser als Kühlfluid verwendet. Denkbar ist jedoch auch die Verwendung eines anderen Kühlfluids. Hierbei ist es jedoch unter Umständen erforderlich das Kühlfluid im Kreislauf zu führen. Dies erfordert jedoch eine Kühlung des Kühlfluids. In diesem Fall wird durch die vorliegende Erfindung nicht die Menge an Kühlwasser oder eine Kühlfluids reduziert, sondern die zur Kühlung des im Kreislauf gepumpten Kühlfluids erforderliche Energie. Dies ist gleichbedeutend mit der Reduzierung der erforderlichen Kühlwassermenge.

Nachfolgend wird die Erfindung anhand bevorzugter Ausführungsformen unter Bezugnahme auf die anliegenden Zeichnungen näher erläutert.

Es zeigen:
- Figur 1: Eine schematische Darstellung einer Diffusionspumpe,
- Figur 2: eine schematische Darstellung des Pumpvorgangs anhand pumpspezifischer Größen,
- Figur 3: eine schematische Darstellung einer Ausführungsform der erfindungsgemäßen Diffusionspumpe und
- Figur 4: eine schematische Darstellung einer Ausführungsform der erfindungsgemäßen Diffusionspumpe.

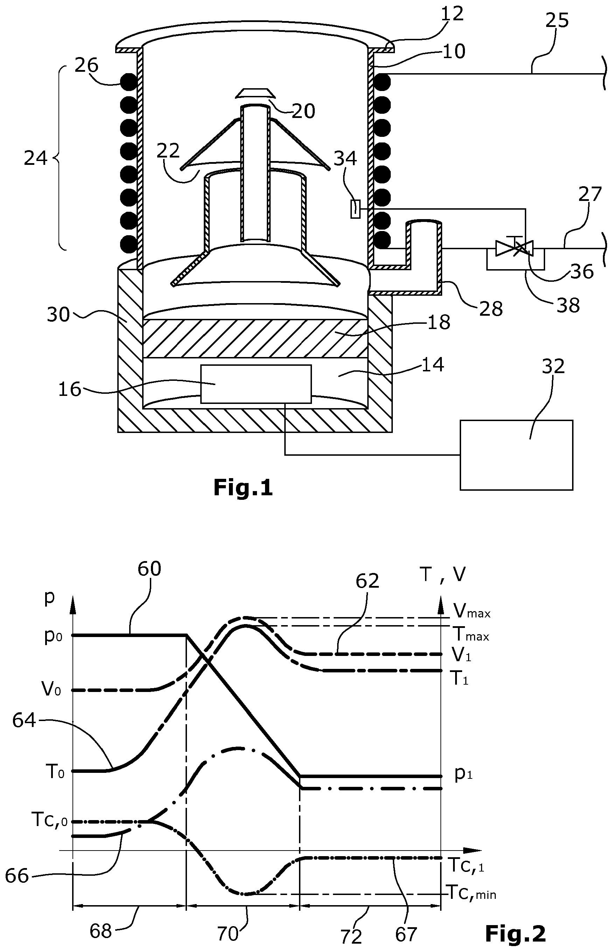

Die Diffusionspumpe gemäß den Figuren 1, 3 und 4 weist ein Gehäuse 10 auf, welches an seinem hochvakuumseitigen Ende einen Flansch 12 aufweist, mit dem das Gehäuse 10 mit einer nicht dargestellten Vakuumkammer verbunden werden kann. Das Gehäuse 10 ist mit einem Siederaum 14 verbunden, welcher ein Heizelement 16 aufweist. Durch das Heizelement 16 wird ein Treibmittel 18 verdampft, das in der Diffusionspumpe aufsteigt und durch die beiden Düsen 20, 22 in das Gehäuse austritt. Vorhandene Gasteilchen werden durch den Treibmitteldampf mitgerissen. Der Treibmitteldampf gelangt zu einem Kondensator 24, welcher im Bereich der Düsen 20, 22 am Gehäuse 10 angeordnet ist. Der Kondensator 24 weist eine Kühlung 26 auf. In der dargestellten Ausführungsform handelt es sich bei der Kühlung 26 um eine Wasserkühlung mit einer Zuleitung 27 und einer Ableitung 25.

Der Treibmitteldampf kondensiert am Kondensator 24 und gelangt zurück in den Siederaum 14.

Zwischen dem Kondensator 24 und dem Siederaum 14 ist ein Vorvakuumstutzen 28 angeordnet, welcher mit einer nicht dargestellten Vorvakuumpumpe verbindbar ist. Vom Treibmitteldampf gefördertes Gas wird über den Vorvakuumstutzen 28 durch die Vorvakuumpumpe abgesaugt.

Um zu verhindern, dass Wärme des Heizelements 16 verloren geht, ist der Siederaum 14 vollständig mit einer Isolierung 30 umgeben. Hierdurch wird verhindert, dass Wärme aus dem Siederaum 14 an die Umgebung abgegeben wird. Dies reduziert die erforderliche Heizleistung des Heizelements 16.

Mit dem Heizelement 16 ist eine Heizelementregelung 32 verbunden, durch die die Heizleistung des Heizelements an die jeweilige Pumpsituation angepasst werden kann.

Im Bereich des Kondensators 24 ist eine Temperaturerfassung 34 angeordnet, die die Kondensatortemperatur T_{c} erfasst. Hierbei wird die Kondensatortemperatur T_{c} an der Kondensatoroberfläche gemessen. Die Temperatur T_{c} des Kondensators 24 kann auch erfasst werden über die Temperatur des Kühlwassers der Ableitung 25. Die Temperaturerfassung ist mit einer Kondensatorkühlungsregelung verbunden, welche als Thermostatventil 36 ausgebildet ist. Über das Thermostatventil 36 lässt sich der Kühlwasserdurchfluss V durch die Kühlung 26 des Kondensators 24 in Abhängigkeit von der erfassten Oberflächentemperatur T_{c} des Kondensators 24 anpassen.

Um sicherzustellen, dass immer eine Mindestkühlung des Kondensators 24 erfolgt, weist die Kondensatorkühlungsregelung eine Notfalleinrichtung auf, welche als Bypass 38 zum Thermostatventil 36 vorgesehen ist. Bei einem Ausfall der Kondensatorkühlungsregelung wird weiterhin Kühlwasser durch den Bypass 38 zur Kühlung 26 des Kondensators 24 geleitet, sodass der Treibmitteldampf weiter kondensiert. Die Notfalleinrichtung ist insbesondere erforderlich bei Stromausfall oder plötzlichem Abschalten der Diffusionspumpe und stellt sicher, dass durch die Mindestkühlung des Kondensators 24 die Diffusionspumpe ordnungsgemäß heruntergefahren werden kann, ohne dass Treibmitteldampf in die Vakuumkammer gelangt.

Der Pumpvorgang wird anhand der Figur 2 detailliert erläutert, wobei es sich um eine schematische Darstellung handelt und keine exakten Werte wiedergibt. Insbesondere ist die Erfindung nicht beschränkt auf ausschließlich den gezeigten Verlauf des Pumpvorgangs, da ein exemplarischer Pumpvorgang gezeigt ist. In Figur 2 sind dabei für die unterschiedlichen Pumpsituationen der Druck p 60, der Kühlmitteldurchfluss V 62, die Heizelementtemperatur T 64, der Dampfdruck des Treibmittels 66 sowie die Kondensatortemperatur T_{c} 67 dargestellt. Die linke vertikale Achse des Diagramms beschreibt dabei den Druck für die Linie 60 und die Linie 66 wohingegen die rechte vertikale Achse die Temperatur für die Linien 64 und 67 sowie den Kühlmitteldurchfluss für die Linie 62 bezeichnet. Auf der horizontalen Achse des Diagramms der Figur 2 sind die unterschiedlichen Pumpsituationen abgetragen.

Im Bereich 68 besteht nur eine geringe oder keine Pumpwirkung. In der Vakuumkammer herrscht ein Druck p₀. Diese Situation liegt zwischen zwei Pumpvorgänge und insbesondre in einem Standby-Betrieb vor.

In dem zweiten Bereich 70 erfolgt eine Druckreduzierung vom Ausgangsdruck p₀ zum Arbeitsdruck p₁ durch ein Abpumpen. Beim Abpumpen 70 der Vakuumkammer wird die Heizleistung und entsprechend die Temperatur T des Heizelements 16 erhöht, auf ihren maximalen Wert Tₘₐₓ , um die Saugleistung der Diffusionspumpe zu erhöhen. Um den erhöhten Wärmeintrag durch das Heizelement 16 zu kompensieren, wird die Kühlwassermenge V zur Kühlung des Kondensators 24 erhöht. Hierbei ist es nicht erforderlich, dass die Kondensatortemeperatur T_{c} im Bereich 70 ein Minimum T_{c,min} ausbildet. Der Kühlmitteldurchfluss V durch den Kondensator 24 kann so gesteuert werden, dass die Kondensatortemperatur T_{c} kontinuierlich von ihrem Ausgangswert T_{c,0} auf den Arbeitswert T_{c,1} abfällt.

Ist in der Vakuumkammer der Arbeitsdruck p₁ erreicht, wird durch die Heizelementregelung die Temperatur T des Heizelements 16 an den oberen Wert des Siedebereiches des verwendeten Treibmittels angepasst. Hierbei wird die Temperatur T des Heizelements 16 von ihrem maximalen Wert Tₘₐₓ, der für das schnelle Erreichen des Arbeitsdrucks p₁ in Bereich 70 erforderlich ist, reduziert auf den Wert T₁. Hierdurch ist weiterhin eine Pumpwirkung sichergestellt, da insbesondere T₁ größer ist als To, so dass jedoch unnötiger Wärmeeintrag verhindert wird. Die Verringerung der Heizleistung von Tₘₐₓ auf T₁ des Heizelements 16 führt gleichzeitig dazu, dass die durchflossene Menge an Kühlwasser V durch die Kondensatorkühlungsregelung in Form des Thermostatventils 36 reduziert wird von Vₘₐₓ auf V₁. Hierdurch erhöht sich die Oberflächentemperatur des Kondensators 24 auf T_{c,1} bzw. wird die Kondensatorendtemperatur T_{c,1} erreicht. Eine Erhöhung der Oberflächentemperatur des Kondensators T_{c} ist jedoch nur vorgesehen falls der Dampfdruck 66 des Treibmittels bei der erhöhten Temperatur weiterhin unterhalb der Arbeitsdrucks p₁ der Vakuumkammer liegt, wie in Fig. 2 gezeigt.

Zwischen zwei Pumpvorgängen 68 wird die Temperatur T des Heizelements 16 reduziert unter den unteren Wert des Siedebereichs des verwendeten Treibmittels. Hierdurch wird kein oder nur sehr wenig Treibmittel 18 verdampft. Eine Pumpenwirkung ist weder erforderlich, noch wird sie bei reduzierter Heizleistung des Heizelements 16 erzielt. Gleichzeitig mit der Reduzierung der Temperatur T des Heizelements 16 auf T₀ zwischen zwei Pumpvorgängen wird der Kühlmitteldurchfluss V der Kühlung 26 des Kondensators 24 durch das Thermostatventil 36 reduziert auf Vo.

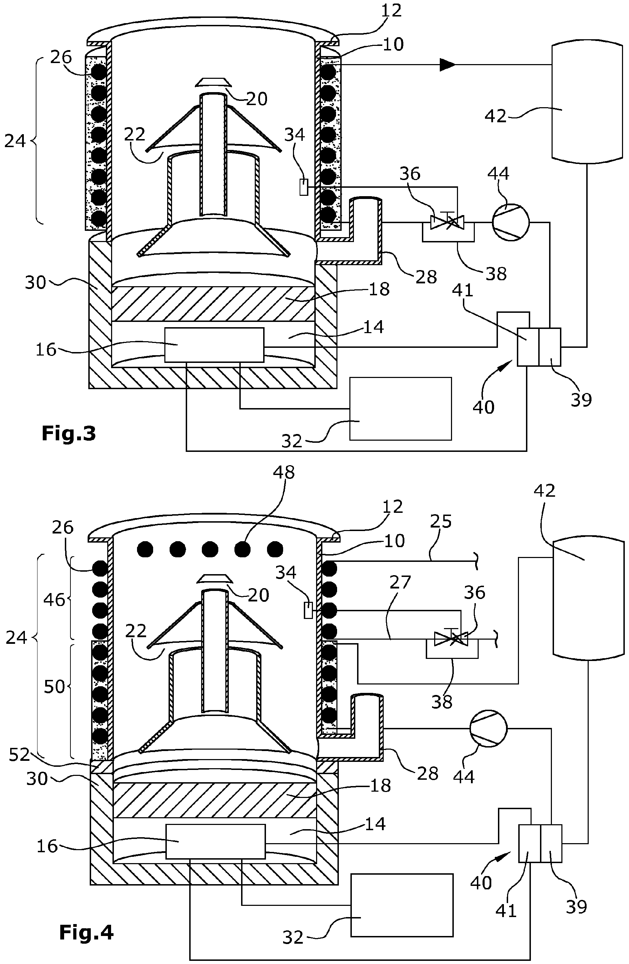

Figur 3 zeigt eine Ausführungsform der Erfindung. Gleiche Teile werden dabei mit gleichen Referenznummern bezeichnet.

In der Ausführungsform der Figur 3 ist die Kühlung 26 verbunden mit einer Wärmepumpe 40, welche einen Kondensator 41 und einen Verdampfer 39 aufweist. Kühlwasser gelangt von der Kühlung 26 am Gehäuse 10 der Diffusionspumpe zu einem Reservoir 42. Von dem Reservoir 42 gelangt das noch warme Kühlwasser zu der Wärmepumpe 40, die dem Kühlwasser Wärme entzieht. Hierdurch wird die Temperatur des Kühlwassers reduziert. Das so abgekühlte Kühlwasser wird über eine Förderpumpe 44 durch das Thermostatventil 36 oder den Bypass 38 der Kühlung 26 zugeführt. Die dem Kühlwasser durch die Wärmepumpe entzogene Wärmeenergie wird über einen Heizkreislauf dem Heizelement 16 zugeführt. Somit wird durch die Kühlung 26 abgeführte Wärme verwendet, um das Treibmittel 18 durch das Heizelement 16 aufzuheizen. Die durch die Kühlung 26 abgeführte Wärme stellt somit keine Verlustleitsung da und gleichzeitig kann die nötige Energie, die dem Heizelement 16 extern zugeführt werden muss beispielsweise in Form von elektrischer Energie, reduziert werden. Dabei ist die Wärmepumpe 40 insbesondere ausgebildet als Kompressionswärmepumpe. Insbesondere kann es vorteilhaft sein die Strömungsrichtung umzudrehen, sodass das Kühlwasser zunächst in der Wärmepumpe 40 seine Wärmeenergie abgibt und sodann in das Reservoir 42 gelangt. Von dort wird das Kühlwasser mittels der Förderpumpe 44 zur Kühlung 26 gefördert.

In Figur 4 ist eine Ausführungsform dargestellt, wobei gleiche Teile mit gleichen Referenznummern bezeichnet werden. Merkmale der vorhergehenden Ausführungsform können zur Reduzierung des Energiebedarfs der Diffusionspumpe mit der Ausführungsform der Figur 4 kombiniert werden, solange sich die Merkmale nicht gegenseitig ausschließen.

In der dritten Ausführungsform ist der hochvakuumseitige Bereich 46 ausgebildet als Wasserkühlung 26. Ebenfalls ist eine Dampfsperre 48 vorgesehen, welche eine Wasserkühlung aufweist. Der sich in Richtung des Heizelements 16 anschließende Bereich 50 des Kondensators 24 ist mit einer Wärmepumpe 40 verbunden, sodass Wärme aus dem Bereich 50 über die Wärmepumpe 40 dem Heizelement 16 zugeführt wird und hierüber das Treibmittel 18 aufheizt. Zusätzlich kann auch im Kreislauf des Wärmetauschers ein steuerbares Thermostatventil angeordnet sein, welches insbesondere durch die Temperaturerfassung 34 oder eine zusätzliche im Bereich 50 angeordnete Temperaturerfassung steuerbar ist.

Insbesondere ist der Siederaum 14 durch einen Isolator 52 thermisch getrennt vom Gehäuse 10. Vom Heizelement 16 erzeugte Wärme gelangt auf Grund des Isolators 52 nicht zum Gehäuse 10 und muss daher nicht über die Kühlung 26 oder die Wärmepumpe 40 abgeführt werden. Dies reduziert den Energieverbrauch der Diffusionspumpe weiter. Der Isolator 52 weist dabei eine geringe Wärmeleitfähigkeit auf.

## Patentansprüche

1. Diffusionspumpe, insbesondere energieeffiziente Diffusionspumpe, mit
einem Gehäuse (10),
einem mit dem Gehäuse (10) verbundenen Siederaum (14),
einem im Bereich des Siederaums (14) angeordneten Heizelement (16),
einer im Gehäuse (10) angeordneten und mit dem Siederaum (14) verbundenen Düse (20,22),
einem an einer Innenseite des Gehäuses (10) im Bereich der Düse (20,22) angeordneten Kondensator (24) und
einer im Bereich des Kondensators (24) angeordneten Kühlung (26) zur Kühlung des Kondensators (24)
**dadurch gekennzeichnet, dass**
die Kühlung (26) des Kondensators (24) über eine Wärmepumpe (40) mit dem Heizelement (16) verbunden ist, so dass Wärme vom Kondensator (24) zum Heizelement (16) befördert wird.

2. Diffusionspumpe nach Anspruch 1,
**dadurch gekennzeichnet, dass**
eine Temperaturerfassung (34) vorgesehen ist, die die Kondensatortemperatur erfasst, wobei die Temperaturerfassung (34) mit einer Kondensatorkühlungsregelung zur Regelung der Kühlung (26) des Kondensators (24) verbunden ist.

3. Diffusionspumpe nach Anspruch 1 oder Anspruch 2,
**dadurch gekennzeichnet, dass**
eine mit dem Heizelement (16) verbundene Heizelementreglung (32) vorgesehen ist zur Anpassung der Heizleistung des Heizelements (16) an die Pumpsituation.

4. Diffusionspumpe nach Anspruch 1 - 3, **dadurch gekennzeichnet, dass** der Siederaum (14) thermisch vom Kondensator (24) durch einen Isolator (52) getrennt ist, wobei insbesondere der Isolator (52) PEEK, PTFE, einen anderen Kunststoff oder eine Keramik aufweist.

5. Diffusionspumpe nach einem der Ansprüche 1 oder 4, **dadurch gekennzeichnet, dass** die Kondensatorkühlungsregelung eine Notfalleinrichtung aufweist, wobei durch die Notfalleinrichtung eine Mindestkühlung des Kondensators (24), insbesondere durch einen Bypass (38) des Thermostatventils (36) sichergestellt ist.

6. Diffusionspumpe nach einem der Ansprüche 1 bis 5, **dadurch gekennzeichnet, dass** ein Verdampfer der Wärmepumpe (40) mit der Kühlung (26) des Kondensators (24) verbunden ist und ein Kondensator der Wärmepumpe (40) mit dem Heizelement (16) verbunden ist.

7. Diffusionspumpe nach einem der Ansprüche 1 bis 6, **dadurch gekennzeichnet, dass** die Wärmepumpe (40) als Kompressionswärmepumpe oder Absorptionswärmepumpe ausgebildet ist.

8. Diffusionspumpe nach einem der Ansprüche 1 bis 7, **dadurch gekennzeichnet, dass** die Kühlung (26) des Kondensators (24) sowohl durch eine Wasserkühlung, als auch durch eine Wärmepumpe (40) erfolgt.

9. Diffusionspumpe nach einem der Ansprüche 1 bis 8, **dadurch gekennzeichnet, dass** der hochvakuumseitige Bereich (46) des Kondensators (24) eine Wasserkühlung aufweist und der sich in Richtung des Heizelements (16) anschließende Bereich (50) des Kondensators (24) mit der Wärmepumpe (40) verbunden ist.

10. Diffusionspumpe nach einem der Anspruche 1 bis 9, **dadurch gekennzeichnet, dass** die Wärmepumpe (40) mehrstufig ausgebildet ist.

## Claims

1. A diffusion pump, in particular an energy-efficient diffusion pump, comprising
a housing (10),
a boiling chamber (14) connected to the housing (10),
a heating element (16) arranged in the area of the boiling chamber (14),
a nozzle (20, 22) arranged in the housing (10) and connected to the boiling chamber (14),
a condenser (24) arranged at an inner surface of the housing (10) in the area of the nozzle (20, 22), and
a cooling system (26) configured for cooling the condenser (24) and arranged in the area of the condenser (24),
**characterized in that**
the cooling system (26) of the condenser (24) is connected to the heating element (16) via a heat pump (40) such that heat from the condenser (24) is supplied to the heating element (16).

2. The diffusion pump according to claim 1,
**characterized in that**
a temperature measuring device (34) is provided which measures the condenser temperature, wherein the temperature measuring device (34) is connected to a condenser cooling system regulator for regulating the cooling system (26) of the condenser (24).

3. The diffusion pump according to claim 1 or claim 2,
**characterized in that**
a heating element regulator (32) connected to the heating element (16) is provided for adjusting the heat output of the heating element (16) to the pumping situation.

4. The diffusion pump according to any one of claims 1-3, **characterized in that** the boiling chamber (14) is thermally isolated from the condenser (24) by an isolator (52), wherein in particular the isolator (52) comprises PEEK, PTFE, another plastic material, or a ceramic material.

5. The diffusion pump according to any one of claims 1 or 4, **characterized in that** the condenser cooling system regulator comprises an emergency means, wherein the emergency means ensures minimum cooling of the condenser (24), in particular by a bypass (38) of the thermostat valve (36).

6. The diffusion pump according to any one of claims 1 to 5, **characterized in that** an evaporator of the heat pump (40) is connected to the cooling system (26) of the condenser (24) and a condenser of the heat pump (40) is connected to the heating element (16).

7. The diffusion pump according to any one of claims 1 to 6, **characterized in that** the heat pump (40) is configured as a compression heat pump or an absorption heat pump.

8. The diffusion pump according to any one of claims 1 to 7, **characterized in that** the cooling system (26) of the condenser (24) is realized both by a water cooling system and a heat pump (40).

9. The diffusion pump according to any one of claims 1 to 8, **characterized in that** the high-vacuum-side area (46) of the condenser (24) comprises a water cooling system and the area (50) of the condenser (24) adjacent in the direction of the heating element (16) is connected to the heat pump (40).

10. The diffusion pump according to any one of claims 1 to 9, **characterized in that** the heat pump (40) is of a multistage configuration.

## Revendications

1. Pompe à diffusion, notamment pompe à diffusion efficace sur le plan de l'énergie, comprenant
un carter (10),
un espace d'ébullition (14) relié au carter (10),
un élément de chauffage (16) disposé proche de l'espace d'ébullition (14),
une buse (20, 22) disposée dans le carter (10) et reliée à l'espace d'ébullition (14), un condenseur (24) disposé sur une face intérieure du carter (10) dans la zone de la buse (20, 22) et
un refroidissement (26) disposé dans la zone du condenseur (24) pour refroidir le condenseur (24),
**caractérisée en ce que**
le refroidissement (26) du condenseur (24) est relié à l'élément de chauffage (16) via une pompe à chaleur (40), si bien que de la chaleur est transportée du condenseur (24) à l'élément de chauffage (16).

2. Pompe à diffusion selon la revendication 1, **caractérisée en ce qu'**il est prévu une prise de température (34) qui prend la température du condenseur, la prise de température (34) étant reliée au système de refroidissement du condenseur pour réguler le refroidissement (26) du condenseur (24).

3. Pompe à diffusion selon la revendication 1 ou la revendication 2, **caractérisée en ce qu'**une régulation de l'élément de chauffage (32) est reliée à l'élément de chauffage (16) pour adapter le rendement de l'élément de chauffage (16) à la situation de pompage.

4. Pompe à diffusion selon l'une des revendications 1 à 3, **caractérisée en ce que** l'espace d'ébullition (14) est séparé thermiquement du condenseur (14) par un isolateur (25), notamment l'isolateur (52) comprenant PEEK, PTFE, une autre matière plastique ou une céramique.

5. Pompe à diffusion selon l'une des revendications 1 ou 4, **caractérisée en ce que** la régulation du refroidissement du condenseur comprend un dispositif d'urgence, un refroidissement minimal du condenseur (24) au moyen du dispositif d'urgence étant notamment assuré par une dérivation de la valve thermostatique (36).

6. Pompe à diffusion selon l'une des revendications 1 à 5, **caractérisée en ce qu'**un vaporiseur de la pompe à chaleur (40) est relié au refroidissement (26) du condenseur (24) et qu'un condenseur de la pompe à chaleur (40) est relié à l'élément de chauffage (16).

7. Pompe à diffusion selon l'une des revendications 1 à 6, **caractérisée en ce que** la pompe à chaleur (40) est configurée comme pompe à chaleur à compression ou comme pompe à chaleur à absorption.

8. Pompe à diffusion selon l'une des revendications 1 à 7, **caractérisée en ce que** le refroidissement (26) du condenseur (24) s'effectue aussi bien avec un refroidissement à eau qu'avec une pompe à chaleur (40).

9. Pompe à diffusion selon l'une des revendications 1 à 8, **caractérisée en ce que** la zone (46) du côté du vide poussé du condenseur (24) comprend un refroidissement à eau et que la zone (50) du condenseur (24) située dans la direction de l'élément de chauffage (16) est reliée à la pompe à chaleur (40).

10. Pompe à diffusion selon l'une des revendications 1 à 9, **caractérisée en ce que** la pompe à chaleur (40) est configurée à plusieurs étages.
